Europäisches Patentamt

European Patent Office

Office européen des brevets

(19)

(11) Veröffentlichungsnummer : **0 125 266**
**B1**

(12) EUROPÄISCHE PATENTSCHRIFT

(45) Veröffentlichungstag der Patentschrift :
27.07.88

(51) Int. Cl.⁴ : **G 06 K · 7/10, G 06 K 9/32**

(21) Anmeldenummer : 83903521.9

(22) Anmeldetag : 17.11.83

(86) Internationale Anmeldenummer :
PCT/EP 83/00303

(87) Internationale Veröffentlichungsnummer :
WO/8402213 (07.06.84 Gazette 84/14)

(54) VERFAHREN UND VORRICHTUNG ZUM IDENTIFIZIEREN VON GEGENSTÄNDEN.

(30) Priorität : 20.11.82 DE 3243009

(43) Veröffentlichungstag der Anmeldung :
21.11.84 Patentblatt 84/47

(45) Bekanntmachung des Hinweises auf die Patenterteilung : 27.07.88 Patentblatt 88/30

(84) Benannte Vertragsstaaten :
AT BE CH DE FR GB LI

(56) Entgegenhaltungen :
EP-A- 0 027 594
DE-A- 3 206 267
FR-A- 2 360 133
US-A- 3 503 043
US-A- 3 553 437
US-A- 3 811 110
US-A- 4 124 797
US-A- 4 152 583

(73) Patentinhaber : Scholze, Inge
Philipp-Holzmann-Strasse 27
D-6072 Dreieich-Dreieichenhain (DE)

(72) Erfinder : WEVELSIEP, Klaus
Fuchstanzstrasse 11
D-6239 Kriftel (DE)

(74) Vertreter : Eisenführ & Speiser
Martinistrasse 24
D-2800 Bremen 1 (DE)

## Beschreibung

Die Erfindung betrifft ein Verfahren und eine Vorrichtung zum Identifzieren von Gegenständen, die in beliebiger Position und Orientierung und zu beliebigen Zeiten in einem Bildfenster erscheinen und ein Datenfeld aufweisen, das in mindestens einer Datenspur kontrastierende Zeichen und mindestens ein vorgegebenes Kontrastlinienmuster (PIC-Muster) umfaßt, welches die Position und die Orientierung der Datenspur(en) kennzeichnet und mehrere Linien mit vorgegebenem Abstand und/oder Linienbreiten enthält, bei dem das Bildfenster opto-elektronisch in mindestens einem zeilen- und spaltenorganisierten Punktraster $(X_i, Y_j)$, $i = 1 \ldots n$, $j = 1 \ldots m$ abgetastet wird und an jedem Rasterpunkt $(X_i, Y_j)$ ein den betreffenden Hell-Dunkelwert kennzeichnendes Video-Rasterpunktsignal $V_{ij}$ abgegeben wird, bei dem die Video-Rasterpunktsignale in vorgegebener Reihenfolge zu einem Videosignal zusammengesetzt werden, bei dem die Position und die Orientierung der Datenspur(en) relativ zum Bildfenster aus dem Auftreten einer dem(n) PIC-Muster(n) entsprechenden PIC-Kontrastfolge(n) innerhalb des Videosignals bestimmt wird, und bei dem anschließend die in dem Video-Signal enthaltene Information dekodiert und die in der(n) Datenspur(en) enthaltenen Zeichen bestimmt werden.

Ein derartiges Verfahren und eine derartige Vorrichtung ist zum Beispiel aus der EP-A-0 027 594 bekannt, bei dem das Bildfenster in einem ersten Verfahrensschritt, dem Suchbetrieb, in einem relativ weitzeiligen Raster unter verschiedenen Suchwinkeln solange abgetastet wird, bis das Kontrastlinienmuster erkannt wird. In einem zweiten Verfahrensschritt wird die Position und Orientierung der Datenspuren relativ zum Bildfenster bestimmt, und in einem dritten Verfahrensschritt, dem Lesebetried, wird das Bildfenster in einem engzeiligen Raster in Richtung der Datenspuren abgetastet und die in den Datenspuren enthaltenen Zeichen gelesen und dekodiert. Um dieses bekannte Verfahren verwirklichen zu können, muß also ein opto-elektrischer Wandler eine Rasterabtastung mit beliebig vorgebbarer Zeilenrichtung jeweils mit derselben hohen Rasterauflösung durchführen können. Bei der Verwirklichung dieses Verfahrens sowie beim Betreiben derartiger Vorrichtungen entstehen Probleme, welche aus der beliebigen Ausrichtbarkeit des Abtastrasters herrühren.

Aus der US-A-4 152 583 ist ein Orientierungssuchverfahren bekannt, welches einen Bildspeicher und eine Kamera mit festem Raster benutzt.

Aus der US-A-4 124 797 ist ein Orientierungssuchverfahren bekannt, bei dem Orientierungsmuster mittels einer Musterschablone erkannt werden. Dieses Verfahren verwendet jedoch keinen Bildspeicher, in dem man anschließend die Datenzeichen finden könnte.

Aufgabe der Erfindung ist es daher, das Verfahren und die Vorrichtung der eingangs genannten Art derart weiterzubilden, daß die opto-elektronische Bildumsetzung mittels eines stationären Abtastrasters erfolgen kann.

Diese Aufgabe wird erfindungsgemäß bei dem Verfahren der eingangs genannten Art dadurch gelöst, daß

a) während jeder Abtastung des Punktrasters $(X_i, Y_j)$ die Video-Rasterpunktsignale $V_{ij}$ dem Originalbild entsprechend in einem zeilen- und spaltenorganisierten Bildspeichers abgespeichert werden,

b) ein zeilen- und spaltenorganisiertes Suchraster $(x_i, y_j)$ die Speicherplätze des Bildspeichers seriell ein- oder mehrmals ausliest und bei jedem Durchlauf das Videosignal abgibt, wobei sich die Zeilen des Suchrasters und des Bildspeichers bei jedem Durchlauf des Suchrasters unter einem vorgegebenen Suchwinkel $\alpha_k$, $k=1, 2, 3 \ldots$ schneiden,

c) das ausgelesene Videosignal auf das Vorhandensein/Nichtvorhandensein der PIC-Kontrastfolge(n) überprüft wird,

d) bei Erkennung der PIC-Kontrastfolge(n) aus zugehörigen Adresskoordinaten des Suchrasters der Schnittwinkel $\beta$ zwischen aktueller Suchrichtung (Winkel $\alpha_k$) und der(n) Datenspur(en), und die Position des Datenfelds innerhalb des Bildspeichers ermittelt und die Richtung der Datenspur(en) (Lesewinkel $\rho = \beta + \alpha_k$ ($\pm$ 90°) innerhalb des gespeicherten Bildes berechnet wird,

e) anschließend gespeicherte Bild mit einem zeilen- und spaltenorganisierten Leseraster $(x_i', y_j')$ in Richtung der bzw. senkrecht zu den Datenspuren ausgelesen und dekodiert wird.

Eine erfindungsgemäße Vorrichtung ist durch die Merkmale des Anspruches 13 gekennzeichnet.

Die Vorteile der Erfindung liegen insbesondere darin, daß der omnidirektionale Lesevorgang mittels einer stationären, d. h. weder mechanisch noch elektrisch drehbaren Rasterabtastung möglich wird, die sich z. B. mittels einer fest angeordneten, matrixförmigen Sensordiodenanordnung verwirklichen läßt. Die opto-elektrische Bildumwandlung findet daher in relativ kurzer Zeit statt, und die sich anschließende Suche nach Erkennung der PIC-Kontrastfolge erfolgt durch mehrfaches Auslesen des Bildspeichers unter jeweils vorgegebenem Suchwinkel, ohne daß dabei der opto-elektrische Wandler aktiviert wird. Diese Auslesung des Bildspeichers kann in einem speziellen Auslesetakt erfolgen, wodurch die Flexibilität des Verfahrens erhöht wird.

Beim Auslesen gibt der Bildspeicher die in den einzelnen Speicherplätzen gespeicherten Video-Rasterpunktsignale in vorgegebener Reihenfolge als Videosignal ab. Wird anschließend die PIC-Kontrastfolge innerhalb mindestens zweier Zeilen des Suchrasters im Videosignal erkannt, so werden die der PIC-Kontrastfolge zugehörigen Adressenkoordinaten des Suchrasters abgespeichert, um aus diesen Koordinaten den Schnittwinkel $\beta$ zwischen aktueller Richtung des Suchrasters und den Datenspuren sowie die Position und die Richtung der Datenspuren innerhalb des gespeicherten Bildes ermitteln zu können. Vorteilhafterweise braucht zur Berechnung dieser benötigten Information kein zusätzliches Zählkoordinaten-Raster erzeugt zu werden.

Bevorzugt wird das mittels des Leserasters ausgelesene Videosignal in einer « Normallage » in einem Zwischenspeicher so zwischengespeichert, daß die Folge der Video-Rasterpunktsignale innerhalb der einzelnen Zeilen bzw. Spalten des Leserasters in die Speicherplätze der Zeilen bzw. Spalten einer zweidimensionalen Speichermatrix eingelesen werden. Besonders bevorzugt wird bei dieser Zwischenspeicherung das Leseraster auf einen dem Datenfeld entsprechenden Bereich begrenzt. Zu diesem Zweck muß während des vorausgegangenen Suchvorganges die Größe des Datenfeldes bestimmt werden. Dadurch ist ein anschließendes Auslesen aus dem Zwischenspeicher zum Dekodieren des Datenfeldes vereinfacht.

Bevorzugt besteht das Kontrastlinienmuster (PIC-Muster) aus mehreren parallelen, geraden Linien mit vorgegebenem Abstand und Linienbreiten. Wenn bei einem derartigen PIC-Muster die Zeilen- oder Spaltenrichtung des Punktrasters des opto-elektronischen Wandlers z. B. um einen relativ geringen Winkel von der Richtung der Linien des PIC-Musters bzw. der Balkenrichtung eines zu lesenden Balkencodes abweicht, entsteht ein gespeicherter Bild, bei dem die einzelnen Linien abgestufte Ränder besitzen, da in dem Bildspeicher die Dunkelbereiche der Linien jeweils nur diskret um einzelne Zeilenbreiten des Punktrasters des opto-elektronischen Wandlers abbildbar sind. Durch mehrfach abgestufte Randzonen der Linien des PIC-Musters bzw. eines zu lesenden Balkencodes entstehen bei der Erkennung der PIC-Kontrastfolge im Videosignal bzw. bei der Dekodierung der Balkencode-Information leicht Erkennungs- bzw. Lesefehler.

Gemäß einer besonders bevorzugten Ausführungsform der Erfindung enthält der opto-elektronische Wandler zur Vermeidung derartiger Erkennungs- oder Lesefehler in einer Ebene mehrere stationäre zeilen- und spaltenorganisierte Sensor-Diodenmatritzen, die zueinander einen vorgegebenen Winkelversatz besitzen. Das Bildfeld wird dann von allen Diodematritzen, bevorzugt nacheinander, in einem Punktraster abgetastet, und es werden die von den einzelnen Diodenmatritzen stammenden Video-Punktrastersignale $V_{ij}$ zur Erzeugung von gespeicherter Bildern in jeweils einen eigenen Bereich eines Bildspeichers bzw. in mehrere Bildspeicher abgespeichert. Bevorzugt wird dann dasjenige gespeicherte Bild ausgewählt, welches mit den geringsten Abbildungsfehlern behaftet ist, und den weiteren Verfahrensschritten unterzogen, d. h. im Suchraster unter verschiedenen Suchwinkeln ausgelesen, bis die PIC-Kontrastfolge(n) erkannt wird und dann das gespeicherte Bild im Leseraster ausgelesen und dekodiert werden kann.

Als geeignetes Kriterium für die Auswahl eines der mehreren gespeicherten Bilder läßt sich z. B. die Anzahl an gespeicherten Video-Rasterpunktsignalen mit Dunkelwert verwenden, d. h. eine Größe, welche sich integral für ein Bild beim Einspeichern erstellen läßt.

Alternativ werden alle gespeicherten Bilder nacheinander mit ein und dem selben Suchraster ausgelesen, und es wird dabei festgestellt, bei welchem Bild sich die PIC-Kontrastfolge(n) am genauesten erkennen läßt. Anschließend wird das auf diese Weise bestimmte Bild in der erfindungsgemäßen Weise weiter verarbeitet. Es ist auf diese Weise möglich, die durch die Diskretisierung des Bildumwandlungprozesses unvermeidlichen Abbildungsfehler beim Erzeugen des zu speichernden Bildes zu verringern. Außerdem läßt sich eine relativ große Sensor-Diodenmatrix mit vorgegebener Mindestauflösung, z. B. 1 000 × 1 000 Pixel, durch mehrere kleinere Sensor-Diodenmatritzen ersetzen, z. B. 4 Diodenmatritzen mit jeweils 500 × 500 Pixel, die zusammen wesentlich preisgünstiger erhältlich sind.

Vorteilhafte Weiterbildungen der Erfindung sind durch die Merkmale der Unteransprüche gekennzeichnet.

Im folgenden wird ein Ausführungsbeispiel der Erfindung anhand der Zeichnung erläutert. Es zeigen :

Fig. 1 eine Ausführungsform eines Datenfelds mit einem Kontrastlinienmuster und einer Datenspur ;

Fig. 2 ein vereinfachtes Blockschaltbild der erfindungsgemäßen Vorrichtung ;

Fig. 3 eine vergrößere schematische Darstellung der Durch a dressierung des Bildspeichers im Suchraster,

Fig. 4 eine schematische Darstellung der Operationen im Bildspeicher der Vorrichtung ; und

Fig. 5 eine schematische Darstellung des Abbildes des Datenfelds im Zwischenspeicher der Vorrichtung.

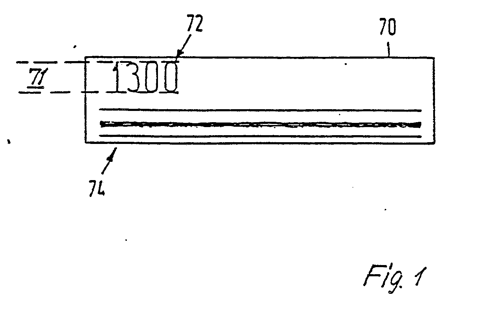

Fig. 1 zeigt ein Datenfeld 70, z. B. ein Preisetikett oder dergl., das in einer Datenspur 71 kontrastierende Zeichen 72 zur Identifizierung der mit diesem Datenfeld versehenen Ware enthält. Die kontrastierenden Zeichen bestehen z. B. aus Klarschriftzeichen einer maschinell lesbaren Schrifttype, z. B. der OCR-A-Schrift bzw. OCR-B-Schrift. Alternativ können die Zeichen auch aus einem bekannten Balkencode bestehen.

In vorgegebener Position und Orientierung zur Datenspur 71 ist ein Kontrastlinienmuster 74 angeordnet, im folgenden Positionsidentifizierungscode-Muster, PIC-Muster genannt, welches mehrere Kontrastlinien enthält, die im dargestellten Beispiel parallel zueinander verlaufen und einen unterschiedlichen Abstand und Linienbreiten besitzen. Das Kontrastlinienmuster 74 kann statt unter der Datenspur auch vorn oder hinten in der Datenspur 71 angeordnet sein. Alternativ lassen sich auch mehrere Kontrastlinienmuster sowie mehrere Datenspuren vorsehen. Das Kontrastlinienmuster 74 ist senkrecht zu den Kontrastlinien asymmetrisch ausgebildet, um das Datenfeld hinsichtlich Beginn und Ende der Datenspuren eindeutig zu kennzeichnen, und um eine Identifizierung der jeweiligen Leserichtung relativ zur üblichen Links-Rechtsrichtung der aufgedruckten Zeichen zu ermöglichen.

Obwohl nur ein PIC-Muster mit jeweils drei Linien dargestellt sind, lassen sich auch PIC-Muster mit mehr als drei Linien verwenden. Ferner lassen sich die PIC-Muster auch in einer anderen als der dargestellten Position und Orientierung relativ zu den Datenspuren anbringen. Im dargestellten Beispiel kennzeichnet die Länge des PIC-Musters im wesentlichen auch die Länge des Datenfeldes. Der speziell gewählten Folge von Kontrastlinien läßt sich ebenfalls eine Information über die Größe des Datenfeldes zuordnen.

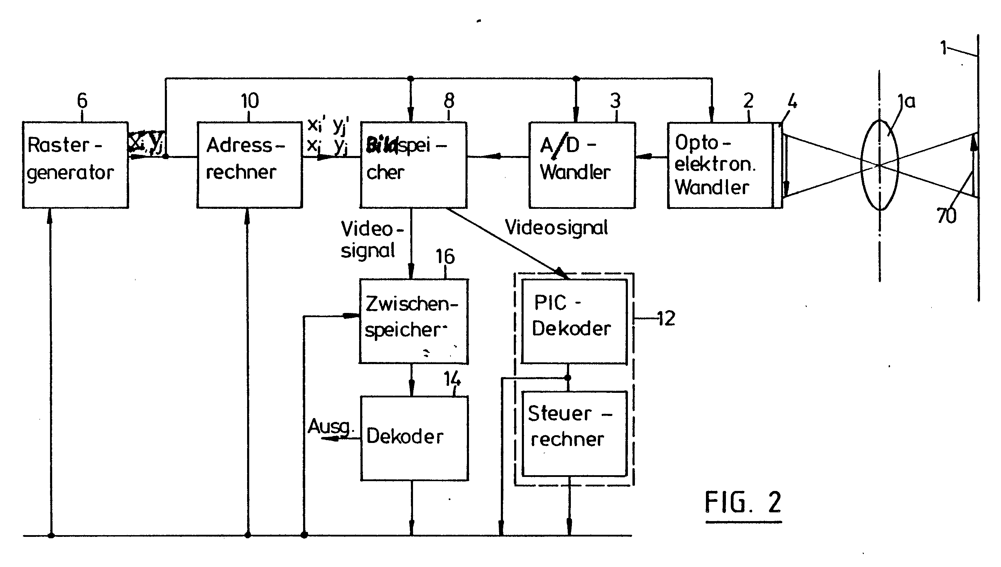

Fig. 2 zeigt ein vereinfachtes Blockschaltbild der Vorrichtung. Ein Datenfeld 70 gemäß Fig. 1, welches z. B. auf einen Behälter, irgendeine Ware, ein industrielles Teil oder dergl. aufgeklebt ist, erscheint in willkürlicher Position und Ausrichtung auf einem Bildfenster 1 und wird über eine Optik 1a von einem elektrooptischen Wandler 2 abgetastet, der als Target mindestens eine als zeilen- und spaltenorganisiertem Matrix ausgebildete Sensor-Diodenanordnung enthält. Eine derartige Diodenmatrix 4 besitzt z. B. n-Spalten $X_i$, i = 1 ... n, die alle in X-Richtung nebeneinander angeordnet sind. Außerdem liegen die Dioden alle in m-Zeilen $Y_j$, j = 1 ... m, die alle in Y-Richtung nebeneinander liegen. Die Dioden der Diodenmatrix 4 bilden somit ein örtlich feststehendes zeilen- und spaltenorganisiertes Punktraster $(X_i, Y_j)$ i = 1 ... n, j = 1 ... m, mittels dessen das Bildfenster 1 abgetastet wird. Jede Diode im Rasterpunkt $X_i$, $Y_j$ leuchtet einen entsprechenden Bildpunkt des Bildfensters 1 aus und erzeugt ein den betreffenden Hell- Dunkelwert des ausgeleuchteten Bildpunktes kennzeichnendes Video-Rasterpunktsignal $V_{ij}$, welches am Ausgang des optoelektronischen Wandlers 2 abgegeben wird.

Um das Bildfenster 1 mittels des durch die Diodenmatrix 4 verwirklichten Punktraster $X_i$, $Y_j$ abzutasten und in die entsprechenden Video-Rasterpunktsignale $V_{ij}$ umzuwandeln, ist ein Rastergenerator 6 vorgesehen, der den Rasterpunkten $X_i$, $Y_j$ zugeordnete Adressenkoordinaten $X_i$, $Y_j$ abgibt und mit diesen Adressenkoordinaten die entsprechenden Rasterpunkte $X_i$, $Y_j$ aktiviert oder adressiert. Die adressierten Rasterpunkte $X_i$, $Y_j$ d. h. die entsprechenden Dioden $D_{ij}$ geben dann das zugehörige Video-Rasterpunktsignal $V_{ij}$ ab, welches den von dieser Diode wahrgenommenen Hell- Dunkelwert des entsprechenden Bildpunktes des Datenfelds kennzeichnet.

Jedes Rasterpunktsignal $V_{ij}$ wird in einen Analog/Digitalwandler 3 in ein digitales Rasterpunktsignal $V_{ij}$ umgewandelt, welches eine Information über den Hell-Dunkelwert des abgebildeten Bildpunktes enthält.

Die digitalen Rasterpunktsignale $V_{ij}$ werden einem Bildspeicher 8 zugeführt, der eine dem Punktraster $X_i$, $Y_j$ entsprechende, zeilen- und spaltenorganisierte Speichermatrix mit den Adressenkoordinaten $X_i$, $Y_j$ enthält. Gleichzeitig

mit der Adressierung des Rasterpunktes $X_i$, $Y_j$ wird vom Rastergenerator der jeweils zugeordnete Speicherplatz $X_i$, $Y_j$ adressiert, in welchem das vom Rasterpunkt $X_i$, $Y_j$ abgegebene, digitalisierte Rasterpunktsignal $V_{ij}$ abgespeichert wird. Der Rohspeicher arbeitet bei der dargestellten Ausführungsform also mit den selben Adressenkoordinaten $X_i$, $Y_j$ wie die im optoelektronischen Wandler 2 enthaltene Diodenmatrix 4. Dies bedeutet, daß das von der Diodenmatrix wahrgenommene Datenfeld 70 innerhalb des Bildfensters 1 in Form einer Projektion, d. h. ohne Rotation und-/oder Translation in den Bildspeicher « abgebildet » wird und dort in der von der Diodenmatrix wahrgenommenen Relativlage als « Bild » abgespeichert wird.

Anschließend wird der Bildspeicher 8 mehrfach mit einem Suchraster zeilensequenziell mehrfach ausgelesen, wobei die Zeilen des Suchrasters die Zeilen oder Spalten der Speichermatrix bei jedem Durchlauf des Suchrasters unter einem vorgegebenen Suchwinkel $\alpha_k$, k = 1, 2, 3 schneiden. Zu diesem Zweck gibt der Rastergenerator 6 die Adressenkoordinaten $X_i$, $Y_j$ erneut ab, die in einem Adressrechner 10 einer Koordinatentransformation, nämlich einer Koordinatendrehung um den Suchwinkel $\alpha_k$ unterzogen werden. Die Adressenkoordinaten $x_i$, $y_j$ des Suchrasters ergeben sich aus einer Koordinatendrehung der Adressenkoordinaten $X_i$, $Y_j$ des Punktrasters bzw. Bildspeichers, wobei wegen der vorhandenen Ortsdiskretisierung der Speicherplätze anschließend in einem Interpolationsverfahren, z. B. der « nearest neighbour interpolation » jeweils diejenigen Speicherplätze mit den Adressen $x_i$, $y_j$ ausgewählt werden, welche den mittels einer Koordinatendrehung errechneten Werten x, y:

$$x = X_i \cos \alpha_k + y_j \sin \alpha_k$$

$$\text{und } y = X_i \sin \alpha_k + y_j \cos \alpha_k \qquad (1)$$

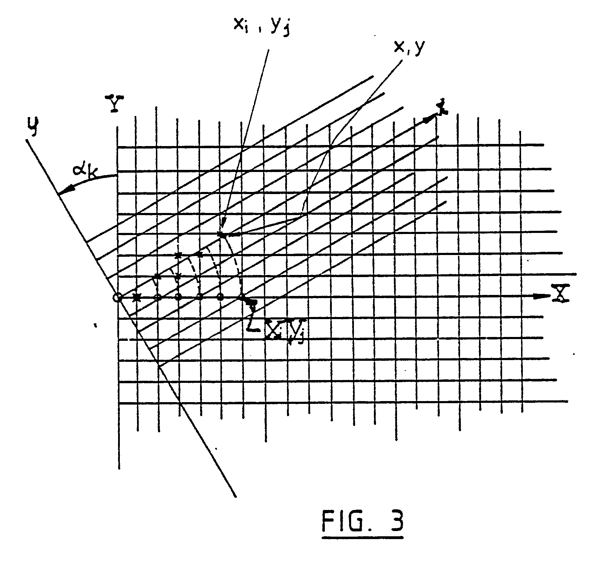

am nächsten liegen, vergl. insbesondere Figur 3.

Die Abtastung mittels des um den Suchwinkel $\alpha_k$ gedrehten Suchrasters $x_i$, $y_j$, erzeugt, da eine Ortsdiskretisierung vorliegt, grundsätzlich einen Abbildungsfehler, da an dem Ort eines gemäß den Transformationsgleichungen (1) errechneten Punktes x, y im allgemeinen physikalisch kein Speicherplatz existiert. Vielmehr ist mittels eines geeigneten Interpolationsverfahrens der gemäß (1) berechnete Wert x, y durch eine Abrundung auf den nächstgelegenen, physikalisch existenten Speicherplatz $x_i$, $y_j$ erforderlich.

Ein mögliches Interpolationsverfahren zur Auffindung physikalisch existenter Speicherplätze $x_i$, $y_j$ besteht in der üblichen algebraischen Abrundung des aus den Transformationsgleichungen (1) gewonnenen Rechenergebnisses x, y. Wird z. B. das Rechenergebnis mit 20 Bit gewonnen, so wird zweckmäßigerweise bei 10 Bit breiten Eingangswerten für $X_i$, $Y_j$ das Ergebnis wiederum auf 10 Bit abgerundet. Diese Rundung ist ohnehin notwendig, da die « gedrehten » Adressenkoordinaten X, Y ebenfalls nur dieselbe Bit-Breite wie die umgedrehten Adressenkoordinaten besitzen können. Dieses Verfahren, das sogenannte « Nearest neighbour interpolation » — Verfahren hat den Nachteil, daß die Transformation eines Speicherplatzes in jeder Koordinatenrichtung um einen Speicherplatz fehlerhaft sein kann, wodurch eine zuvor geradlinige Kontur — z. B. die Zeilen der Speichermatrix des Bildspeichers — nach der Drehung unregelmäßiger verlaufen, wie dies in Fig. 3 dargestellt ist. Der hierdurch erzeugte Fehler wird umso geringer ausfallen, je kleiner die Abmessungen der Pixel (einzelne Dioden) innerhalb der Diodenmatrix im Vergleich zu den abgebildeten Konturen sind.

Eine teilweise Korrektur des bei der Adressenkoordinaten-Transformation unvermeidlichen Fehlers ist dadurch möglich, daß vor der Transformation der Adresse $X_i$, $Y_j$ die Umgebung dieser Adresse betrachtet und die Ortssektoren von der betrachteten Adresse $X_i$, $Y_j$ zu den acht nächsten Nachbaradressen zwischengespeichert werden. Nach der Drehung um den Suchwinkel $\alpha_k$ müssen diese Nachbarschaftsbeziehungen, sofern kein Fehler entstehen soll, erhalten bleiben. Aufgrund der örtlichen Diskretisierung der Adressenkoordinaten werden jedoch die gespeicherten Orstvektoren ebenfalls dem Abrundungsfehler unterworfen, d. h. die zuvor gespeicherte Nachbarschaftsbeziehung wird ebenfalls gestört. Der erforderliche Korrekturalgorithmus muß nun so arbeiten, daß die durch die gespeicherte Ortsvektoren festgehaltene Nachbarschaftsbeziehungen möglichst wenig gestört werden. Aus Gründen der Rechenzeit ist eine derartige Korrektur bei der Bestimmung der Adressenkoordinaten des Suchrasters bzw. des Leserasters nur in Hardware möglich.

Die Auslesung des gespeicherten Bildes mittels des Suchrasters $x_i$, $y_j$ erfolgt speicherplatz- und zeilensequenziell, so daß am Ausgang des Bildspeichers 8 ein Videosignal abgegeben wird, welches die digitalen Video-Rasterpunktsignale aus dem Bildspeicher 8 in der adressierten Reihenfolge enthält. Das abgegebene Video-Signal wird einem PIC-Dekoder 12 zugeführt, der das Video-Signal auf das Vorhandensein/Nichtvorhandensein der PIC-Kontrastfolge innerhalb des Video-Signals überprüft. Ein aus der deutschen Patentanmeldung P 29 15 732.2 bekannter PIC-Dekoder 12 prüft dabei im Delta-Distance-Verfahren, ob die PIC-Kontrastfolge in den einzelnen Zeilen des Videosignals auftaucht.

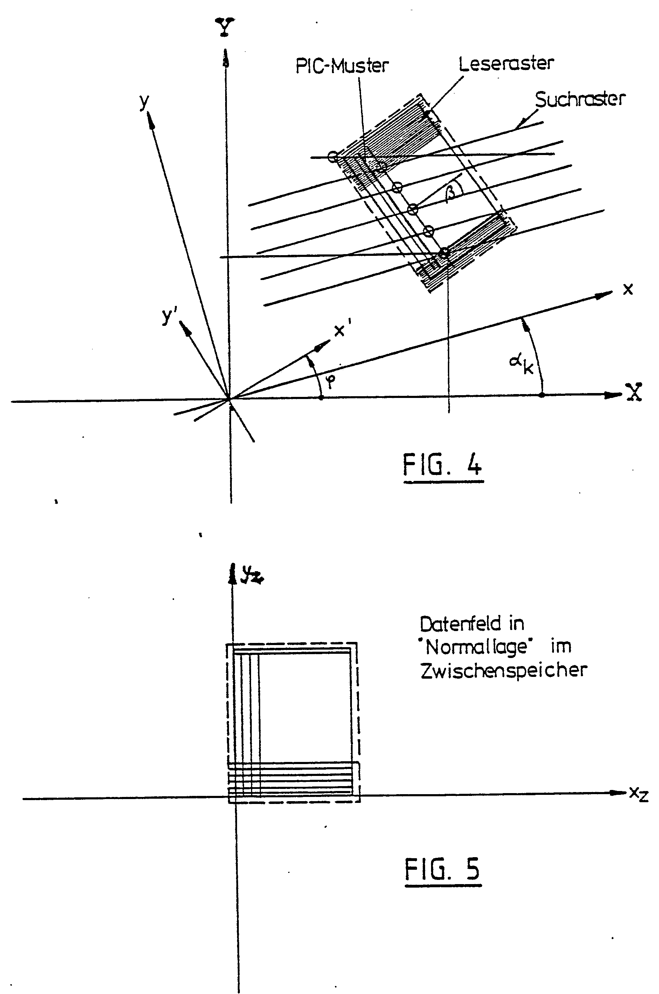

Wird von dem PIC-Dekoder 12 die PIC-Kontrastfolge(n) innerhalb der Zeilenabschnitte des Videosignals — und zwar in mindestens zwei ausreichend beabstandeten Zeilen des Suchrasters — erkannt, so werden die der PIC-Kontrastfolge(n) innerhalb des Videosignals zugehörigen Adressenkoordinaten des Suchrasters in dem PIC-Dekoder 12 zwischengespeichert und der Schnittwinkel $\beta$ zwischen aktueller Suchrichtung, welche durch den Suchwinkel $\alpha_k$ gekennzeichnet ist, in einer Richtung bestimmt, welche durch die PIC-Muster bzw. die Kontrastlinien festgelegt ist, vergl. Fig. 4. Aus dem aktuellen Suchwinkel $\alpha_k$

und dem ermittelten Schnittwinkel wird die Richtung der Datensur(en), oder eine hierzu senkrechte Richtung, die sogenannte Leserichtung innerhalb des Speicherbildes berechnet, welche durch den Lesewinkel $\rho = \alpha_k + \beta$ ($\pm$ 90°) gekennzeichnet ist.

Anschließend wird das Bild innerhalb des Bildspeichers 8 mit einem zeilen- und spaltenorganisierten Leseraster in Leserichtung ausgelesen und Rasterpunktsignal nach Rasterpunktsignal in einen zeilen- und spaltenorganisierten Zwischenspeicher 16 eingelesen, wobei die nacheinander innerhalb der Zeilen oder Spalten des Lserasters ausgelesenen Rasterpunktsignale in aufeinanderfolgende Speicherplätze der Zeilen oder Spalten des Zwischenspeichers 16 eingespeichert werden, so daß im Zwischenspeicher das Speicherbild um den Lesewinkel $\rho$ gedreht eingespeichert wird, vgl. Fig. 5.

Um den Zwischenspeicher 16 klein halten zu können, wird bei Erkennung der PIC-Kontrastfolge innerhalb des Videosignals und der anschließenden Berechnung des Lesewinkels auch die Position des Datenfeldes innerhalb des gespeicherten Bildes ermittelt und die Eckkoordinaten des Datenfeldes innerhalb der Suchrasterkoordinaten bestimmt. Das Leseraster läßt sich dann auf einen dem Datenfeld entsprechenden Bereich des gespeicherten Bildes begrenzen, vergl. Fig. 4.

Gemäß Fig. 5 wird in den Zwischenspeicher 16 das Datenfeld in « Normallage » eingelesen. Zu diesem Zweck ist neben der Drehung des Rasters um den Lesewinkel $\rho$ eine zusätzliche Koordinaten-Translation derart durchzuführen, daß die ausgewählte Ecke des Datenfelds in den Ursprung der Speichermatrix des Zwischenspeichers 16 transformiert wird. Alle anderen Adressenkoordinaten des Lserasters werden entsprechend transformiert, vergl. Fig. 4 und 5.

Der Dekoder 14 liest aus dem Zwischenspeicher 16 das in « Normallage » gespeicherte Datenfeld entsprechend dem Dekodier-Algorithmus aus, dekodiert die auf diese Weise erhaltene Information und gibt an seinem Ausgang die dekodierte Information ab. Ein zur Dekodierung von OCR-Zeichen einsetzbarer Dekoder ist z. B. aus der deutschen Patentanmeldung P 30 14 513 bekannt. Bei diesem bekannten Dekoder 14 werden den einzelnen Zeichen entsprechende Bereiche einzeln ausgelesen und dekodiert. Die einzelnen dekodierten Zeichen werden dann am Ausgang des Dekoders 16 an eine Anzeigeeinrichtung oder zur Weiterverarbeitung gegeben.

Die Diodenmatrix 4 kann aus mehreren einzelnen Diodenmatrixen aufgebaut sein, die alle in einer Ebene angeordnet sind. Um die — durch die örtliche Diskretisierung der Sensoranordnung bedingten — Abbildungsfehler möglichst gering zu halten, können die einzelnen Diodenmatrixen zueinander einen vorgegebenen Winkelversatz besitzen und jeweils das Bildfenster 1 in je einen Bildspeicher abbilden. Der Suchvorgang zum Auffinden des PIC-Musters wird dann entweder nur an demjenigen Bild mit den geringsten Abbildungsfehlern oder nacheinander an den einzelnen Bildern durchgeführt, um die Position und Orientierung des PIC-Musters im Bild möglichst genau zu erkennen. Es wird dann nur dasjenige Bild ausgelesen welches die geringsten Abbildungsfehler besitzt, bzw. bei dem das PIC-Muster am sichersten erkannt wurde. Das Einlesen in den Zwischenspeicher 16 sowie das Dekodieren der im Zwischenspeicher 16 gespeicherten Information mittels des Dekoders 14 erfolgt dann auf die schon beschriebene Art und Weise.

**Patentansprüche**

1. Verfahren zum Identifizieren von Gegenständen, die in beliebiger Position und Orientierung und zu beliebigen Zeiten in einem Bildfenster erscheinen und ein Datenfeld aufweisen, das in mindestens einer Datenspur kontrastierende Zeichen und mindestens ein vorgegebenes Kontrastlinienmuster (PIC-Muster) umfaßt, welches die Position und die Orientierung der Datenspur(en) kennzeichnet und mehrere Linien mit vorgegebenem Abstand und/oder Linienbreiten enthält,
bei dem das Bildfenster opto-elektronisch in mindestens einem zeilen- und spalten organisierten Punktraster $(X_i, Y_j, i = 1 \dots n, j = 1 \dots m)$ abgetastet wird und an jedem Rasterpunkt $(X_i, Y_j)$ ein den Hell-Dunkelwert des abgetasteten Bildpunkts kennzeichnendes Video-Rasterpunktsignal $V_{ij}$ abgegeben wird,
bei dem die Video-Rasterpunktsignale in vorgegebener Reihenfolge zu einem Videosignal zusammengesetzt werden,
bei dem die Position und die Orientierung der Datenspur(en) relativ zum Bildfenster aus dem Auftreten einer dem(n) PIC-Muster(n) entsprechenden PIC-Kontrastfolge(n) innerhalb des Videosignals bestimmt wird,
und bei dem anschließend die in dem Video-Signal enthaltene Information dekodiert und die in der(n) Datenspur(en) enthaltenen Zeichen bestimmt werden,
dadurch gekennzeichnet, daß
a) während jeder Abtastung des Punktrasters $(X_i, Y_j)$ die Video-Rasterpunktsignale $V_{ij}$ dem Originalbild entsprechend in einem zeilen- und spaltenorganisierten Bildspeichers abgespeichert werden,
b) ein zeilen- und spaltenorganisiertes Suchraster $(x_i, Y_j)$ die Speicherplätze des Bildspeichers seriell ein- oder mehrmals ausliest und bei jedem Durchlauf das Videosignal abgibt, wobei sich die Zeilen des Suchrasters und des Bildspeichers bei jedem Durchlauf des Suchrasters unter einem vorgegebenen Suchwinkel $\alpha_k, k = 1, 2, 3 \dots$ schneiden,
c) das ausgelesene Videosignal auf das Vorhandensein/Nichtvorhandensein der PIC-Kontrastfolge(n) überprüft wird,
d) bei Erkennung der PIC-Kontrastfolge(n) aus zugehörigen Adresskoordinaten des Suchrasters der Schnittwinkel $\beta$ zwischen aktueller Suchrichtung (Winkel $\alpha_k$) und der(n) Datenspur(en), und die Position des Datenfelds innerhalb des Bildspeichers ermittelt und die Richtung der Datenspur(en) (Lesewinkel $\rho = \beta + \alpha_k \, (\pm 90°)$) innerhalb des gespeicherten Bildes berechnet wird,
e) anschließend gespeicherte Bild mit einem zeilen- und spaltenorganisierten Leseraster $(x_i', y_j')$ in Richtung der bzw. senkrecht zu den Datenspuren ausgelesen und dekodiert wird.

2. Verfahren nach Anspruch 1, dadurch gekennzeichnet, daß das mittels des Leserasters in Richtung der bzw. senkrecht zu den Datenspur(en) aus dem Bildspeicher ausgelesene Video-Signal zeilen- und spaltenorganisiert zwischengespeichert wird und aus dem Zwischenspeicher zum Dekodieren ausgelesen wird.

3. Verfahren nach Anspruch 1 oder 2, dadurch gekennzeichnet, daß das Leseraster nur einen dem Datenfeld entsprechenden Bereich des Bildspeichers ausliest und zwischenspeichert.

4. Verfahren nach einem der vorstehenden Ansprüche, dadurch gekennzeichnet, daß das Suchraster gegenüber dem Leseraster relativ weitzeilig ist.

5. Verfahren nach einem der vorstehenden Ansprüche, dadurch gekennzeichnet, daß aufeinanderfolgende Suchraster sich in ihrer Winkellage jeweils um einen konstanten Winkelschritt $\Delta\alpha$ unterscheiden.

6. Verfahren nach einem der vorstehenden Ansprüche, dadurch gekennzeichnet, daß die Ansteuerung des Punktrasters $(X_i, Y_j)$ und die Einspeicherung der entsprechenden Video-Rasterpunktsignale mittels derselben Adressenansteuerung erfolgt.

7. Verfahren nach einem der vorstehenden Ansprüche, dadurch gekennzeichnet, daß der vom Leseraster ausgelesene Bereich des Bildspeichers so in den Zwischenspeicher eingelesen wird, daß eine der Ecken des Datenfeldes, welche die Adressenkoordinaten $(X_o, Y_o)$ besitzt, im Adressenursprung $(X = 0, Y = 0)$ des Zwischenspeichers zu liegen kommt.

8. Verfahren nach einem der vorstehenden Ansprüche, dadurch gekennzeichnet, daß das Bildfenster in mehreren stationären Punktrastern $(X_i, Y_j)$ abgetastet wird, die relativ zueinander einen vorgegebenen Winkelversatz besitzen, und daß die Video-Rasterpunktsignale jedes Punktrasters als je ein Bild abgespeichert werden.

9. Verfahren nach Anspruch 8, dadurch gekennzeichnet, daß die gespeicherten Bilder nacheinander mit den Verfahrensschritten b), c) und d) bearbeitet werden, und daß anschließend der Verfahrensschritt e) nur an einem ausgewählten gespeicherten Bild durchgeführt wird.

10. Verfahren nach Anspruch 8, dadurch gekennzeichnet, daß die gespeicherten Bilder nacheinander den Verfahrensschritten b) und c) unterzogen werden, bis die PIC-Kontrastfolge(n) zuverlässig erkannt wird, und daß anschließend bei dem betreffenden gespeicherten Bild die Verfahrensschritte d) und e) durchgeführt werden.

11. Verfahren nach Anspruch 8, dadurch gekennzeichnet, daß dasjenige gespeicherte Bild ausgewählt wird, welches die meisten Video-Rasterpunktsignale mit Dunkelwert enthält, und daß die Verfahrensschritte b), c), d) und e) nur an dem ausgewählten gespeicherten Bild ausgeführt werden.

12. Verfahren nach einem der vorstehenden Ansprüche, dadurch gekennzeichnet, daß die Adressenkoordinaten des Suchrasters ($x_i$, $y_j$) durch eine Koordinatendrehung der Adressenkoordinaten des Bildspeichers ($x_i$, $y_j$) und eine anschließende Interpolation erzeugt werden, bei welcher jeweils die der gedrehten Adressenkoordinate nächstkommende tatsächliche Adressenkoordinate des Bildspeichers ausgewählt wird.

13. Vorrichtung zum Identifizieren von Gegenständen, die in beliebiger Position und Orientierung und zu beliebigen Zeiten in einem Bildfenster erscheinen und ein Datenfeld aufweisen, das in mindestens einer Datenspur kontrastierende Zeichen und mindestens ein vorgegebenes Kontrastlinienmuster (PIC-Muster) umfaßt welches die Position und die Orientierung der Datenspur(en) kennzeichnet und mehrere Linien mit vorgegebenem Abstand und/oder Linienbreiten enthält, mit

einem Rastergenerator, der die Adressenkoordinaten des(r) Punktraster(s) eines optoelektronischen Wandlers erzeugt und abgibt,

einem PIC-Dekoder zum Erkennen der PIC-Kontrastfolge(n) im Videosignal,

und mit einem Dekoder zum Dekodieren der im Videosignal enthaltenen Information,
dadurch gekennzeichnet, daß

a) der optoelektronische Wandler (2) eine Sensordiodenanordnung (4) enthält, welche das Punktraster ($X_i$, $Y_j$) bildet und an jedem Rasterpunkt eine Sensordiode besitzt,

b) der Rastergenerator (6) gleichzeitig die Sensordiodenanordnung (4) und einen Bildspeicher (8) durchadressiert und das von der jeweils adressierten Sensordiode abgegebene Video-Rasterpunktsignal $V_i$ zur Erzeugung einer gespeicherten Bildes in den gleichzeitig adressierten Speicherplatz des Bildspeichers (8) einliest,

c) ein Adressrechner (10) die vom Rastergenerator (6) gelieferten Adressenkoordinaten ($X_i$, $Y_j$) und vorgegebene Suchwinkel $\alpha_k$, $k = 1, 2, 3$ erhält, in die Adressenkoordinaten des Suchrasters ($x_i$, $y_j$) transformiert und zur Erzeugung des Videosignals den Bildspeicher (8) sequentiell mit den transformierten Adressenkoordinaten durchadressiert,

d) das vom Bildspeicher (8) abgegebene Video-Signal dem PIC-Dekoder (12) zuführbar ist,

e) der PIC-Dekoder (12) bei Erkennung der PIC-Kontrastfolge(n) die zugehörigen Adressenkoordinaten des Suchrasters speichert, aus den gespeicherten Adressenkoordinaten den Schnittwinkel $\beta$ zwischen aktueller Suchrichtung (Winkel $\alpha_k$) und der(n) Datenspur(en) berechnet und aus dem Schnittwinkel $\beta$ und dem aktuellen Suchwinkel $\alpha_k$ den Lesewinkel $\rho = \beta + \alpha_k$ ($\pm 90°$) berechnet.

f) der Adressrechner anschließend erneut vom Rastergenerator (6) die Adressenkoordinaten, und vom PIC-Dekoder (12) den Lesewinkel $\rho$

erhält, in die Adressenkoordinaten des Leserasters transformiert und den Bildspeicher (8) sequentiell mit den transformierten Adressenkoordinaten durchadressiert,

g) und das mittels Leseraster vom Bildspeicher (8) ausgelesene Videosignal dem Dekoder (14) zuführbar ist.

14. Vorrichtung nach Anspruch 13, dadurch gekennzeichnet, daß ein Zwischenspeicher (16) vor dem Dekoder (14) vorgesehen ist, der das im Leseraster aus dem Bildspeicher (8) ausgelesene Videosignal zeilensequentiell in einer zeilen- und spaltenorganisierten Speichermatrix zwischenspeichert, wobei aufeinanderfolgende Speicherplätze der Speichermatrix mit aufeinanderfolgend aus dem Bildspeicher (8) ausgelesene Video-Rasterpunktsignale belegt werden.

15. Vorrichtung nach Anspruch 13 oder 14, dadurch gekennzeichnet, daß der Adressrechner (10) die Adressenkoordinaten des Rastergenerators (6) einzeln einer Koordinatendrehung um einen vorgegebenen Winkel (aktueller Suchwinkel $\alpha_k$ oder Lesewinkel $\rho$) unterwirft und anschließend die dem Rechenwert nächstkommende, im Bildspeicher (8), vorhandene Adressenkoordinaten auswählt und als transformierte Adressenkoordinaten abgibt.

16. Vorrichtung nach einem der Ansprüche 13 bis 15, dadurch gekennzeichnet, daß die Sensordiodenanordnung (4) als zeilen- und spaltenorganisierte stationäre Diodenmatrix ausgebildet ist.

17. Vorrichtung nach einem der Ansprüche 13 bis 15, dadurch gekennzeichnet, daß die Sensordiodenanordnung (4) eine Diodenzeile enthält, und daß eine optische Einrichtung vorgesehen ist, die die Diodenzeile optisch in Spaltenrichtung schrittweise mit fortschreitendem vom Rastergenerator (8) geliefertem Zeilenkoordinaten-Signal auslenkt und das Punktraster erzeugt.

18. Vorrichtung nach einem der Ansprüche 13 bis 15, dadurch gekennzeichnet, daß die Sensordiodenanordnung (4) mehrere stationäre zeilen- und spaltenorganisierte Diodenmatritzen enthält, die zueinander einen vorgegebenen Winkelversatz besitzen, und je ein Punktraster ($X_i$, $Y_j$) bilden, daß die jeweils zugehörigen Video-Rasterpunktsignale $V_{ij}$ jedes Punktrasters in je einem zugeordneten Bereich des Bildspeichers (8) abspeicherbar und einzeln weiter auswertbar sind.

**Claims**

1. A method of identification of objects which appear in any position and orientation and at any times in a window and exhibit a data field which in at least one data track comprises contrasting symbols and at least one predetermined contrast line sample (PIC sample) which character izes the position and the orientation of the data track(s) and contains a number of lines having a predetermined pitch and/or line width ;

in which method the window is scanned optoelectronically in at least one dot raster ($X_i$, $Y_j$, $i = 1 \ldots n$, $j = 1 \ldots m$) organized in lines and columns and at each raster dot $(X_i, Y_j)$ a video raster dot signal $V_{ij}$ is emitted to characterize the light-dark value of the scanned image point ;

in which method the video raster dot signals are collected in a predetermined sequence into a video signal ;

in which method the position and the orientation of the data track(s) relative to the window are determined from the appearance of a PIC contrast sequence or sequences within the video signal, corresponding with the PIC sample(s) ;

and in which method the information contained in the video signal is subsequently decoded and the symbols contained in the data track(s) are determined ;
characterized in that

a) during each scan of the dot raster $(X_i, Y_j)$ the video raster dot signals $V_{ij}$ are stored to correspond with the original picture in an image store organized in lines and columns ;

b) a search raster $(x_i, y_j)$ organized in lines and columns reads out the storage locations from the image store in series one or more times and at each run through emits the video signal, in doing which the lines of the search raster and of the image store at each run through of the search raster intersect at a predetermined search angle $\alpha_k$, k = 1, 2, 3... ;

c) the video signal read out is checked against the presence/absence of the PIC contrast sequence(s) ;

d) upon recognition of the PIC contrast sequence(s) from associated address coordinates of the search raster the angle $\beta$ of intersection between the present direction of search (angle $\alpha_k$) and the data track(s) and the position of the data field within the image store are determined and the direction of the data track(s) (read angle $\gamma = \beta + \alpha_k (\pm 90°)$) within the stored image is calculated ;

e) subsequently the stored image is read out in the direction of or respectively perpendicular to the data tracks by a read raster $(x_i', y_j')$ organized in lines and columns, and decoded.

2. A method as in Claim 1 characterized in that the video signal read out from the image store in the direction of or respectively perpendicular to the data track(s) by means of the read raster, is stored temporarily in a manner organized in lines and columns and is read out from the temporary store for decoding.

3. A method as in Claim 1 or 2, characterized in that the read raster reads out and temporarily stores only one region of the image store, corresponding with the data field.

4. A method as in one of the preceding Claims, characterized in that the search raster as compared with the read raster has lines relatively far apart.

5. A method as in one of the preceding Claims, characterized in that succeeding search rasters intersect in their respective angular positions at a constant angular step $\Delta\alpha$.

6. A method as in one of the preceding Claims, characterized in that the selection of the dot raster $(X_i, Y_j)$ and the storage of the corresponding video raster dot signals is effected by means of the same address selection.

7. A method as in one of the preceding Claims, characterized in that the region of the image store read out by the read raster is read into the temporary store in such a way that one of the corners of the data field, which has the address coordinates $(X_o, Y_o)$ comes to lie at the address origin $(X = 0, Y = 0)$ of the temporary store.

8. A method as in one of the preceding Claims, characterized in that the window is scanned in a number of stationary dot rasters $(X_i, Y_j)$ which relatively to one another have a predetermined angular offset, and that the video raster dot signals of each dot raster are stored as one image each.

9. A method as in Claim 8, characterized in that the stored images are processed one after another by the steps b), c) and d) of the method, and that subsequently step e) of the method is performed upon only one selected stored image.

10. A method as in Claim 8, characterized in that the stored images are subjected one after another to the steps b) and c) of the method until the PIC contrast sequence(s) is recognized for certain, and that subsequently the steps d) and e) of the method are performed upon the stored image in question.

11. A method as in Claim 8, characterized in that the stored image selected is that which contains the most video raster dot signals of dark value, and that the steps b), c), d) and e) of the method are carried out upon the selected stored image only.

12. A method as in one of the preceding Claims, characterized in that the address coordinates of the search raster $(x_i, y_j)$ are generated through a coordinate turning of the address coordinates of the image store $(x_i, y_j)$ and a subsequent interpolation in which the actual address coordinate of the image store which at the time comes nearest to the turned address coordinate is selected.

13. A device for the identification of objects which appear in any position and orientation and at any times in a window and exhibit a data field which in at least one data track comprises contrasting symbols and at least one predetermined contrast line sample (PIC sample) which characterizes the position and the orientation of the data track(s) and contains a number of lines having a predetermined pitch and/or line width, having :

a raster generator which generates and emits the address coordinates of the dot raster(s) from an optoelectronic converter ;

a PIC decoder for recognizing the PIC contrast sequence in the video signal ; and

a decoder for decoding the information contained in the video signal ;
characterized in that

a) the optoelectronic converter (2) contains a sensor diode arrangement (4) which forms the dot raster $(X_i, Y_j)$ and has at each raster dot a sensor diode ;

b) the raster generator (6) addresses simultaneously the sensor diode arrangement (4) and an image store (8) and for the generation of a stored image reads the video raster dot signal $V_i$ emitted by the sensor diode addressed at the time, into the simultaneously addressed storage location in the image store (8) ;

c) an address calculator (10) receives the address coordinates $(X_i, Y_j)$ delivered by the raster generator (6) and predetermined search angles $\alpha_k$, k = 1, 2, 3, transforms them into the address coordinates of the search raster $(x_i, y_j)$ and for the generation of the video signal addresses the image store (8) sequentially with the transformed address coordinates ;

d) the video signal emitted by the image store (8) may be fed to the PIC decoder (12) ;

e) the PIC decoder (12) upon recognition of the PIC contrast sequence(s) stores the associated address coordinates of the search raster, calculates from the stored address coordinates the angle $\beta$ of intersection between the present direction of search (angle $\alpha_k$) and the data track(s) and from the angle $\beta$ of intersection and the present search angle $\alpha_k$ calculates the read angle $\gamma = \beta + \alpha_k (\pm 90°)$ ;

f) the address calculator subsequently receives afresh from the raster generator (6) the address coordinates and from the PIC decoder (12) the read angle $\gamma$, transforms them into the address coordinates of the read raster and addresses the image store (8) sequentially with the transformed address coordinates ; and

g) the video signal read out by means of the read raster from the image store (8) may be fed to the decoder (14).

14. A device as in Claim 13, characterized in that a temporary store (16) is provided before the decoder (14), which stores temporarily and line-sequentially in a storage matrix organized in lines and columns, the video signal read out from the image store (8) in the read raster, so that successive storage locations in the storage matrix become occupied by video raster dot signals read out in succession from the image store (8).

15. A device as in Claim 13 or 14, characterized in that the address calculator (10) subjects the address coordinates from the raster generator (6) individually to a coordinate turning through a predetermined angle (present search angle $\alpha_k$ or read angle $\gamma$) and subsequently selects the address coordinates present in the image store (8), which come nearest to the calculated value and issues them as transformed address coordinates.

16. A device as in one of the Claims 13 to 15, characterized in that the sensor diode arrangement (4) is made as a stationary diode matrix organized in lines and columns.

17. A device as in one of the Claims 13 to 15, characterized in that the sensor diode arrangement (4) contains one line of diodes and that an optical device is provided, which deflects the line of diodes optically in the direction of the columns in step with a progressive line coordinates signal delivered by the raster generator, and generates the dot raster.

18. A device as in one of the Claims 13 to 15, characterized in that the sensor diode arrangement (4) contains a number of stationary diode matrices organized in lines and columns, which have with respect to one another a predetermined angular offset and form one dot raster $(X_i, Y_j)$ each, and that the respectively associated video raster dot signals $V_{ij}$ of each dot raster may be stored and evaluated in one associated region each of the image store (8).

**Revendications**

1. Procédé d'identification d'objets qui apparaissent dans une fenêtre suivant une position et une orientation quelconques et à des instants quelconques et présentant une zone de données qui comprend des signes contrastants dans au moins une piste de données et au moins un échantillon prédéterminé de lignes de contraste (échantillon PIC) qui caractérise la position et l'orientation de la (des) piste(s) de données et contient plusieurs lignes avec intervalle et/ou largeur de lignes prédéterminés, dans lequel la fenêtre est exploitée par voie opto-électronique dans au moins une trame ponctuelle $(X_i, Y_j, i = 1 ... n, j = 1 ... m)$ organisée en lignes et en colonnes, et dans lequel on émet en chaque point de trame $(X_i, Y_j)$, un signal de point de trame vidéo $V_{ij}$ caractérisant la valeur clair-obscur du point d'image exploré,

dans lequel les signaux de points de trame vidéo sont réunis dans un ordre déterminé en un signal vidéo,

dans lequel la position et l'orientation de la (des) piste(s) de données par rapport à la fenêtre sont déterminées par la production au sein du signal vidéo d'une (de) suite(s) de contrastes PIC correspondant à l'(aux) échantillon(s) PIC et

dans lequel l'information contenue dans le signal vidéo est ensuite décodée et les signes contenus dans la (les) piste(s) de données sont déterminés, caractérisé en ce que :

a) pendant chaque exploration de la trame ponctuelle $(X_i, Y_j)$ les signaux de points de trame vidéo $V_{ij}$ sont mémorisés en correspondance avec l'image originale dans une mémoire d'images organisée en lignes et en colonnes.

b) Une trame de recherche $(x_i, Y_j)$ organisée en lignes et en colonnes lit en série une ou plusieurs fois les positions de la mémoire d'images et émet à chaque passage le signal vidéo, les lignes de la trame de recherche et de la mémoire d'images se recoupant suivant un angle de recherche prédéterminé $\alpha_k$, k = 1, 2, 3 ... à chaque passage de la trame de recherche.

c) Le signal vidéo lu est examiné afin de vérifier la présence/l'absence de la (des) suite(s) de contraste(s) PIC.

d) Lors de la reconnaissance de la ou des suite(s) de contraste PIC, on calcule à partir des coordonnées d'adresse correspondantes de la trame de recherche, l'angle d'intersection $\beta$ entre

la direction instantanée de recherche (angle $\alpha_k$) et la (les) piste(s) de données, la position du champ de données à l'intérieur de la mémoire d'images et la direction de la (des) piste(s) de données (angle de lecture $\rho = \beta + \alpha_k$ ($\pm 90°$)) à l'intérieur de la mémoire d'image.

e) L'image mémorisée est ensuite lue et décodée au moyen d'une trame de lecture ($x_i$, $y_j$) organisée en lignes et en colonnes, suivant la direction des pistes de données ou perpendiculairement à celles-ci.

2. Procédé selon la revendication 1, caractérisé en ce que le signal vidéo lu dans la mémoire d'images au moyen de la trame de lecture, suivant la direction des pistes de données ou perpendiculairement à celles-ci est stocké dans une mémoire intermédiaire selon une organisation en lignes et en colonnes et est lu dans la mémoire intermédiaire aux fins de décodage.

3. Procédé selon la revendication 1 ou 2, caractérisé en ce que la trame de lecture ne lit et ne mémorise provisoirement qu'un domaine de la mémoire d'images correspondant à la zone de données.

4. Procédé selon l'une quelconque des revendications précédentes, caractérisé en ce que la trame de recherche est à lignes relativement larges par rapport à la trame de lecture.

5. Procédé selon l'une quelconque des revendications précédentes, caractérisé en ce que les trames de recherche successives se distinguent dans leur position angulaire à chaque fois par un pas angulaire constant $\Delta\alpha$.

6. Procédé selon l'une quelconque des revendications précédentes, caractérisé en ce que la commande de la trame ponctuelle ($X_i$, $Y_j$) et le stockage des signaux de points de trame vidéo correspondants sont effectués au moyen de la même commande d'adresse.

7. Procédé selon l'une quelconque des revendications précédentes, caractérisé en ce que le domaine de la mémoire d'images lu par la trame de lecture est enregistré dans la mémoire intermédiaire de telle sorte qu'un des coins de la zone de données qui possède les coordonnées d'adresse ($X_o$, $Y_o$), vienne se placer à l'origine d'adresse ($X = 0$, $Y = 0$) de la mémoire intermédiaire.

8. Procédé selon l'une quelconque des revendications précédentes, caractérisé en ce que la fenêtre est explorée dans plusieurs trames ponctuelles fixes qui possèdent entre elles un décalage angulaire prédéterminé et en ce que les signaux de point de trame vidéo de chaque trame de points, sont mémorisés à chaque fois, sous forme d'une image.

9. Procédé selon la revendication 8, caractérisé en ce que les images mémorisées sont traitées successivement selon les étapes de procédé b), c), et d) et en ce qu'ensuite, l'étape de procédé e), n'est exécutée que sur une image mémorisée sélectionnée.

10. Procédé selon la revendication 8, caractérisé en ce que les images mémorisées sont soumises successivement aux étapes de procédé b) et c) jusqu'à ce que la (les) suite(s) de contraste PIC soit (soient) identifiée(s) de manière sûre et qu'ensuite, les étapes de procédé d) et c) sont exécutées pour l'image mémorisée considérée.

11. Procédé selon la revendication 8, caractérisé en ce qu'on sélectionne l'image mémorisée qui contient la majeure partie des signaux de point de trame vidéo à valeur obscure et en ce qu'on exécute les étapes de procédé b), c), d) et e) seulement sur l'image mémorisée sélectionnée.

12. Procédé selon l'une quelconque des revendications précédentes, caractérisé en ce que les coordonnées d'adresses de la trame de recherche ($x_i$, $Y_j$) sont générées au moyen d'une rotation des coordonnées d'adresses de la mémoire d'images ($x_i$, $Y_j$) et d'une interpolation consécutive au cours de laquelle il est procédé à la sélection des coordonnées d'adresse effectives de la mémoire d'images suivant les coordonnées d'adresses ayant subi une rotation.

13. Dispositif d'identification d'objets qui apparaissent dans une fenêtre suivant une position et une orientation quelconques et à des instants quelconques et présentent une zone de données qui comprend des signes contrastants dans au moins une piste de données, et au moins un échantillon prédéterminé de lignes de contraste (échantillon PIC) qui caractérise la position et l'orientation de la (des) piste(s) de données et contient plusieurs lignes avec intervalle et/ou largeur de lignes prédéterminés, comportant :

un générateur de trames qui génère et fournit les coordonnées de la (des) trame(s) ponctuelle(s) d'un convertisseur opto-électronique,

un décodeur PIC pour l'identification de la ou des suites de contraste PIC dans le signal vidéo,

et un décodeur pour le décodage de l'information contenue dans le signal vidéo,
caractérisé en ce que :

a) Le convertisseur (2) opto-électronique contient un arrangement (4) de diodes détectrices qui constitue la trame ponctuelle ($X_i$, $Y_j$) et possède en chaque point de trame, une diode détectrice.

b) Le générateur de trame (6) effectue en même temps, l'adressage d'un arrangement (4) de diodes détectrices et d'une mémoire d'images (8) et enregistre dans l'emplacement mémoire de la mémoire d'images (8) qui est adressé simultanément, le signal de point de trame vidéo $V_i$ émis par la diode détectrice adressé à chaque fois pour la génération d'une image mémorisée.

c) Un calculateur d'adresses (10) reçoit les coordonnées d'adresses ($X_i$, $Y_j$) fournies par le générateur de trame (6) et l'angle de recherche prédéterminé $\alpha_k$, $k = 1, 2, 3$, les transforme en coordonnées d'adresse de la trame de recherche ($x_i$, $y_j$) et effectue l'adressage de la mémoire d'images (8) suivant un mode séquentiel avec les coordonnées d'adresse transformées, pour générer le signal vidéo de la mémoire d'images (8).

d) Le signal vidéo délivré par la mémoire d'images (8) peut être transféré au décodeur PIC (12).

e) Le décodeur PIC (12) mémorise, lors de l'identification de la (des) suite(s) de contrastes PIC, les coordonnées d'adresses correspondantes de la trame de recherche, calcule à partir des coordonnées d'adresses stockées, l'angle d'intersection β entre la direction de recherche instantannée (angle $\alpha_k$) et la (les) piste(s) de données (angle $\alpha_k$) et à partir de l'angle d'intersection et de l'angle instantanné de recherche $\alpha_k$, l'angle de lecture ρ = β + $\alpha_k$ (± 90°).

f) le calculateur d'adresses reçoit ensuite à nouveau les coordonnées d'adresses provenant du générateur de trame (6) et l'angle de lecture ρ provenant du décodeur PIC (12), les transforme en coordonnées d'adresse de la trame de lecture et effectue l'adressage de la mémoire d'images (8) suivant un mode séquentiel avec les coordonnées d'adresse transformées.

g) Et en ce que le signal vidéo lu dans la mémoire d'images (8) au moyen de la trame de lecture, peut être transféré.

14. Dispositif selon la revendication 13, caractérisé en ce qu'il est prévu en amont du décodeur (14) une mémoire intermédiaire (16) qui stocke ligne par ligne le signal vidéo lu dans la trame de lecture à partir de la mémoire d'images (8) dans une matrice de mémoire organisée en lignes et en colonnes, les positions de mémoire successives de la matrice de mémoire étant occupées par des signaux successifs de points de trame vidéo lus dans la mémoire d'images (8).

15. Dispositif selon la revendication 13 ou 14, caractérisé en ce que le calculateur d'adresses (10) soumet individuellement les coordonnées d'adresse du générateur de trames (6) à une rotation selon un angle prédéterminé (angle de recherche instantanné $\alpha_k$ ou angle de lecture ρ), sélectionne ensuite, parmi les coordonnées d'adresses qui se trouvent dans la mémoire d'images (8), celles qui suivent la valeur de calcul et les délivre sous forme de coordonnées d'adresse transformées.

16. Dispositif selon l'une des revendications 13 à 15, caractérisé en ce que l'arrangement de diodes détectrices (4) est réalisé sous forme d'une matrice de diodes fixe, organisée en lignes et en colonnes.

17. Dispositif selon l'une des revendications 13 à 15, caractérisé en ce que l'arrangement de diodes détectrices (4) contient une ligne de diodes et en ce qu'on prévoit un dispositif optique, qui dévie optiquement, pas à pas, suivant la direction des colonnes, la ligne de diodes au moyen du signal progressif de coordonnées de ligne fourni par le générateur de trames (8), et génère la trame ponctuelle.

18. Dispositif selon l'une des revendications 13 à 15, caractérisé en ce que l'arrangement de diodes détectrices (4) contient plusieurs matrices de diodes fixes, organisées en lignes et en colonnes, qui présentent entre elles un décalage angulaire prédéterminé et constituent chacune une trame ponctuelle ($X_i$, $Y_j$), et en ce que les signaux correspondants de point de trame vidéo $V_{ij}$ de chaque point de trame sont mémorisables chacun dans un domaine de la mémoire d'images (8) qui leur est respectivement affecté et sont ensuite évaluables individuellement.

72    70

7    1300

74

Fig. 1

1

FIG. 2

FIG. 3

PIC-Muster    Leseraster    Suchraster

$\beta$

$y$

$y'$    $x'$

$\varphi$

$\alpha_k$

X

Y

x

## FIG. 4

$y_z$

Datenfeld in
'Normallage' im
Zwischenspeicher

$x_z$

## FIG. 5

4